# EUROPEAN PATENT APPLICATION

(11) **EP 4 847 331 A1**
(43) Date of publication of application: **02.12.2026**
(21) Application number: 26181025.3
(22) Date of filing: 26.05.2026
(51) Int. Cl.: B60T 13/74, B60T 1/06, F16D 55/226, F16D 65/18, F16D 121/24, F16D 127/06, F16D 129/10

(54) **ELECTRO-MECHANICAL BRAKING APPARATUS AND VEHICLE**

(30) Priority: 30.05.2025 CN 202510724883
(71) Applicant: Huawei Technologies Co., Ltd., Shenzhen, Guangdong 518129 (CN)
(72) Inventor: LI, Xianan, Shenzhen, 518129 (CN); WANG, Yuchen, Shenzhen, 518129 (CN); ZHANG, Weilong, Shenzhen, 518129 (CN); XIA, Gongchuan, Shenzhen, 518129 (CN); YE, Shuiyou, Shenzhen, 518129 (CN)
(74) Representative: Epping - Hermann - Fischer

(57) **Abstract**

This application provides an electro-mechanical braking apparatus (100) and a vehicle. The electro-mechanical braking apparatus includes a brake motor (20) and a parking mechanism (30). The brake motor outputs a braking force through a motor shaft (21). The parking mechanism includes a rotating shaft (31), a connecting rod (32), a driving member (33), a ratchet (211), and a pawl (34). The rotating shaft is spaced apart from the motor shaft in a radial direction of the motor shaft. The connecting rod includes a first end (321) and a second end (322) that are opposite to each other, and a middle segment of the connecting rod is configured to rotatably connect to the rotating shaft. The driving member is in transmission connection to the first end, and drives, through the first end, the second end to rotate around the rotating shaft. The ratchet is sleeved on an outer circumferential surface of the motor shaft, the pawl is elastically connected to the second end, the pawl is in single-flank engagement with a ratchet tooth in a circumferential direction of the motor shaft when the second end is positioned at a first parking position, and the pawl releases the ratchet tooth when the second end is positioned at a second parking position. According to the electro-mechanical braking apparatus provided in this application, a structure of the parking mechanism is optimized to reduce an amplitude of a follow-up motion during re-clamping, so that a service life of the electro-mechanical braking apparatus is prolonged while parking reliability is ensured.

## Description

### TECHNICAL FIELD

This application relates to the field of vehicle technologies, and specifically, to an electro-mechanical braking apparatus and a vehicle.

### BACKGROUND

A parking mechanism is integrated in an electro-mechanical braking apparatus, so that the electro-mechanical braking apparatus may have a parking function. The parking mechanism is configured to unidirectionally lock the electro-mechanical braking apparatus, to prevent a friction plate from releasing a brake disc. To improve reliability, the electro-mechanical braking apparatus needs to re-clamp the brake disc after being unidirectionally locked by the parking mechanism for a period of time, to eliminate a gap that may be formed between the brake disc and the friction plate due to cooling. During re-clamping of the electro-mechanical braking apparatus, the parking mechanism may experience a follow-up motion. An excessive amplitude of the follow-up motion may lead to wear and tear after longterm use.

### SUMMARY

This application provides an electro-mechanical braking apparatus and a vehicle. A structure of a parking mechanism integrated in the electro-mechanical braking apparatus is optimized, so that an amplitude of a follow-up motion of the parking mechanism during re-clamping of the electro-mechanical braking apparatus is reduced, and a service life of the electro-mechanical braking apparatus is prolonged while parking reliability is ensured.

According to a first aspect, this application provides an electro-mechanical braking apparatus. The electro-mechanical braking apparatus includes a brake motor and a parking mechanism. The brake motor outputs a braking force through a motor shaft. The parking mechanism includes a rotating shaft, a connecting rod, a driving member, a ratchet, and a pawl. The rotating shaft is spaced apart from the motor shaft in a radial direction of the motor shaft, and a central axis of the rotating shaft is parallel to a central axis of the motor shaft. The connecting rod includes a first end and a second end that are opposite to each other, a middle segment of the connecting rod is configured to rotatably connect to the rotating shaft, and the first end and the second end are respectively arranged on two sides of the middle segment in a radial direction of the rotating shaft. The driving member is configured to be in transmission connection to the first end, the driving member is configured to drive, through the first end, the second end to rotate around the rotating shaft, and the second end is configured to position at a first parking position or a second parking position. The ratchet is configured to be sleeved on an outer circumferential surface of the motor shaft. The pawl is elastically connected to the second end, the pawl is in single-flank engagement with a ratchet tooth in a circumferential direction of the motor shaft when the second end is positioned at the first parking position, and the pawl releases the ratchet tooth when the second end is positioned at the second parking position.

According to the electro-mechanical braking apparatus provided in this application, the parking mechanism acts on the outer circumferential surface of the motor shaft, to implement a unidirectional locking function on the motor shaft during parking. The driving member and the pawl are respectively arranged on two sides of the rotating shaft. The driving member drives, through the connecting rod, the pawl to rotate toward the ratchet and be in single-flank engagement with the ratchet tooth, or the driving member drives, through the connecting rod, the pawl to rotate away from the ratchet and release the ratchet tooth. In the electro-mechanical braking apparatus provided in this application, the second end of the connecting rod is further elastically connected to the pawl, so that during re-clamping of the electro-mechanical braking apparatus, only the motor shaft needs to be driven to drive the ratchet to rotate reversely, and the ratchet pushes the pawl back toward the second end to complete the operation. During re-clamping of the electro-mechanical braking apparatus, the connecting rod and the driving member may remain relatively stationary. That is, an amplitude of a follow-up motion of the parking mechanism is small during re-clamping, and the driving member may keep a trend of locking the ratchet. According to the electro-mechanical braking apparatus provided in this application, a service life of the electro-mechanical braking apparatus is prolonged while parking reliability is ensured.

In an implementation, the pawl includes an engagement surface, and the engagement surface is configured to engage with the ratchet tooth when the second end is positioned at the first parking position. The central axis of the motor shaft and the central axis of the rotating shaft are arranged on a same side of a central perpendicular line of the engagement surface.

In this implementation, the central perpendicular line of the engagement surface of the pawl is a direction of pressure present when the pawl is in single-flank engagement with the ratchet tooth. The central axis of the motor shaft and the central axis of the rotating shaft are constrained to be arranged on the same side of the central perpendicular line of the engagement surface, so that a pressure from the ratchet tooth generates a torque on the pawl to drive the connecting rod to move toward the first parking position, thereby preventing the torque on the pawl from driving the connecting rod to move toward the second parking position and thus disengaging the single-phase engagement between the pawl and the ratchet tooth.

In an implementation, the engagement surface faces the rotating shaft in an arrangement direction of the motor shaft and the rotating shaft.

In this implementation, an orientation of the engagement surface that is of the pawl and that engages with the ratchet tooth is constrained, so that the electro-mechanical braking apparatus pushes the pawl toward the rotating shaft during re-clamping, thereby ensuring that the ratchet reliably rotates and implementing a re-clamping function.

In an implementation, the brake motor outputs the braking force by driving the motor shaft to rotate, where the pawl is in single-flank engagement with the ratchet tooth to restrict the motor shaft from rotating in an opposite direction of the output braking force.

In this implementation, a rotation direction of the motor shaft when the brake motor outputs the braking force corresponds to a motion direction for a friction plate to clamp a brake disc, and the rotation direction of the motor shaft is the same as a rotation direction during parking and re-clamping of the electro-mechanical braking apparatus. A rotation direction in which the pawl is in single-flank engagement with the ratchet tooth is opposite to a rotation direction in which the motor shaft outputs the braking force. This can prevent the motor shaft from rotating in reverse, which causes the friction plate to release the brake disc, thereby improving reliability of a parking function of the electro-mechanical braking apparatus.

In an implementation, a rotation direction in which the second end rotates from the first parking position to the second parking position is the same as the rotation direction in which the motor shaft outputs the braking force. In this implementation, a rotation direction of the connecting rod relative to the ratchet in a process of locking or releasing the ratchet tooth is constrained, so that the connecting rod is facilitated to drive the pawl to engage with or disengage from the ratchet tooth, thereby avoiding interference between the pawl and the ratchet and causing jamming of the parking mechanism.

In an implementation, a size range in which the pawl slides relative to the second end is greater than a tooth height of the ratchet tooth. In this way, in a process in which the motor shaft drives the ratchet to rotate and re-clamps, the pawl slides back toward the second end, so that a path is cleared for the ratchet tooth, thereby avoiding displacement of the driving member and the connecting rod.

In an implementation, the parking mechanism includes a spring, the pawl is rotatably or slidably connected to the second end, and the spring is positioned between the connecting rod and the pawl in an abutting manner and is configured to drive the pawl to rotate or slide toward the ratchet.

In this implementation, the spring abuts against the pawl to allow the pawl to rotate or slide relative to the second end, so that the pawl is pushed by the ratchet tooth during re-clamping of the electro-mechanical braking apparatus, thereby compressing the spring, and allowing the ratchet to continue to rotate after the pawl retracts to the second end to implement the re-clamping function.

In an implementation, the pawl is rotatably connected to the second end and is located between the second end and the rotating shaft, the spring is a leaf spring, and the leaf spring is configured to push the pawl to rotate toward the ratchet.

In this implementation, in a length direction of the connecting rod, the pawl extends from the second end toward the first end and is rotatably connected to the second end. The spring configured as a leaf spring may abut against the middle segment of the connecting rod and push the pawl to rotate toward the ratchet.

In an implementation, the connecting rod includes an accommodation groove. The accommodation groove is located between the second end and the rotating shaft in an arrangement direction of the second end and the first end, a groove opening of the accommodation groove faces the ratchet in a direction perpendicular to the arrangement direction of the second end and the first end, and the accommodation groove is configured to accommodate the pawl and the leaf spring.

In this implementation, the connecting rod may be provided with the accommodation groove to accommodate the leaf spring, and a structure of a part of the pawl may be accommodated when the pawl is pushed by the ratchet tooth to retract. Therefore, an overall size of the parking mechanism is reduced, and miniaturization of the electro-mechanical braking apparatus is facilitated.

In an implementation, the accommodation groove includes a first groove wall and a second groove wall that are opposite to each other in the arrangement direction of the second end and the first end. The first groove wall is arranged between the first end and the second groove wall, the leaf spring is fastened to the first groove wall, and the pawl is rotatably connected to the second groove wall.

In this implementation, the pawl and the leaf spring are respectively mounted on two opposite groove walls of the accommodation groove, and the pawl and the leaf spring extend toward each other in the length direction of the connecting rod, so that internal space of the accommodation groove can be properly used, and an effect of gradually increasing a thrust force of the leaf spring is formed during retracting of the pawl, thereby ensuring reliable reset of the pawl.

In an implementation, the pawl is rotatably connected to the second end and is located on a side that is of the second end and that faces away from the rotating shaft, the spring is a coil spring, and the coil spring is configured to drive the pawl to rotate toward the ratchet.

In this implementation, in a length direction of the connecting rod, the pawl extends from the second end toward a direction away from the first end and is rotatably connected to the second end. The spring configured as a coil spring may be located at a rotational joint of the pawl and the second end, to drive the pawl to rotate toward the ratchet.

In an implementation, the connecting rod includes a first segment and a second segment that are connected. The first segment is located between the rotating shaft and the first end, the second segment is located between the rotating shaft and the second end, the first segment intersects with the second segment, and an opening of an included angle between the first segment and the second segment faces away from the motor shaft.

In this implementation, an extension path of the connecting rod is bent toward the motor shaft, so that a spacing between the driving member and the motor shaft can be shortened, the overall size of the parking mechanism can be reduced, and miniaturization of the electro-mechanical braking apparatus is facilitated.

In an implementation, the connecting rod includes a third segment. The second end is connected to the second segment through the third segment, the third segment intersects with the second segment, and an opening of an included angle between the third segment and the second segment faces the motor shaft.

In this implementation, the connecting rod is further bent between the rotating shaft and the second end, so that the included angle with the opening facing the motor shaft is formed between the second segment and the third segment, thereby further shortening a spacing between the pawl and the ratchet, and reducing a rotation angle of the connecting rod around the rotating shaft. In this way, the overall size of the parking mechanism is further reduced, which facilitates miniaturization of the electro-mechanical braking apparatus.

In an implementation, in the direction perpendicular to the arrangement direction of the second end and the first end, a radius of an outer circumferential surface of the ratchet is greater than a distance between the second end and the central axis of the motor shaft, and is greater than a distance between the central axis of the rotating shaft and the central axis of the motor shaft.

In this implementation, a bend is introduced on the extension path of the connecting rod, so that the rotating shaft and the second end are respectively close to the ratchet, thereby reducing the overall size of the parking mechanism, and facilitating miniaturization of the electro-mechanical braking apparatus.

In an implementation, the driving member includes a parking motor. The parking motor is a linear motor, a stator of the parking motor is fastened to a housing of the electro-mechanical braking apparatus, and a mover of the parking motor is configured to: slide relative to the stator and drive the first end to rotate around the rotating shaft.

In this implementation, the driving member is a parking motor, the parking motor is a linear motor, and the mover of the parking motor slides relative to the stator of the parking motor and drives the first end to rotate around the rotating shaft, to drive the pawl through the second end.

In an implementation, one of the mover of the parking motor and the first end includes a sliding pin, the other of the mover of the parking motor and the first end includes a sliding groove, the sliding pin is configured to: extend into the sliding groove and slide in the sliding groove, and a length direction of the sliding groove intersects with a sliding direction of the mover.

In this implementation, because the mover of the parking motor and the connecting rod are both rigid bodies, during a process in which the mover of the parking motor drives the first end of the connecting rod to slide, a motion trajectory of the first end is a straight line. The sliding groove cooperates with the sliding pin, so that a degree of freedom between the mover of the parking motor and the connecting rod in the radial direction of the motor shaft of the brake motor can be released. This achieves an effect in which the first end rotates around the motor shaft while sliding with the mover of the parking motor.

In an implementation, the driving member includes a parking motor. The parking motor is a rotary motor, a stator of the parking motor is fastened to a housing of the electro-mechanical braking apparatus, and a rotor of the parking motor is configured to: be in transmission connection to the connecting rod through a lead screw nut, and drive, through the connecting rod, the first end to rotate around the rotating shaft.

In this implementation, the parking motor is in a form of a rotary motor, and drives, through the lead screw nut, the first end to rotate around the rotating shaft. A lead screw or a nut in the lead screw nut is configured to rotate synchronously with the rotor of the parking motor, and the nut or the lead screw in the lead screw nut is configured to: slide in a direction of the central axis of the parking motor, and drive the first end to rotate around the rotating shaft. The parking motor has low costs, and is easy to control.

In an implementation, coordinated motion between the lead screw nut and the first end is achieved by the sliding pin and the sliding groove.

In an implementation, the driving member includes an electromagnet and a sliding block. The electromagnet is fastened to a housing of the electro-mechanical braking apparatus, the sliding block is slidably connected to the housing of the electro-mechanical braking apparatus, and the electromagnet is configured to drive the sliding block to slide and drive the first end to rotate around the rotating shaft.

In this implementation, the driving member is the electromagnet and the sliding block. The electromagnet drives the sliding block to drive the first end to move toward or away from the electromagnet by switching between an energized state and a de-energized state, to implement an operation of driving the pawl by the connecting rod. A motion trajectory of the sliding block may be in a curve shape, to adapt to rotation of the first end around the motor shaft.

According to a second aspect, this application provides a vehicle. The vehicle includes a wheel and the electro-mechanical braking apparatus provided in any one of the foregoing implementations, the electro-mechanical braking apparatus is fastened to a vehicle frame of the vehicle, and the electro-mechanical braking apparatus is configured to brake a brake disc of the wheel. The vehicle provided in this application uses the foregoing electro-mechanical braking apparatus, so that parking reliability is improved, and a service life of the electro-mechanical braking apparatus is prolonged.

### BRIEF DESCRIPTION OF DRAWINGS

To describe technical solutions in this application more clearly, the following briefly describes accompanying drawings used for describing implementations. It is clear that the accompanying drawings in the following descriptions are merely some implementations of this application, and a person of ordinary skill in the art may still derive other drawings from these accompanying drawings without creative efforts.
FIG. 1 is a diagram of a structure of a vehicle at a wheel according to an embodiment of this application;
FIG. 2 is a diagram of a framework of an electro-mechanical braking apparatus according to an embodiment of this application;
FIG. 3 is a diagram of a partial structure of an electro-mechanical braking apparatus according to an embodiment of this application;
FIG. 4 is a diagram of a partial structure of an electro-mechanical braking apparatus according to an embodiment of this application;
FIG. 5 is a diagram of a structure of a ratchet in an electro-mechanical braking apparatus according to an embodiment of this application;
FIG. 6 is a diagram of a structure of a parking mechanism at a second parking position in an electro-mechanical braking apparatus according to an embodiment of this application;
FIG. 7 is a diagram of a partial structure of an electro-mechanical braking apparatus according to an embodiment of this application;
FIG. 8 is a diagram of a partial structure of an electro-mechanical braking apparatus according to an embodiment of this application;
FIG. 9 is a diagram of a partial structure of an electro-mechanical braking apparatus according to an embodiment of this application;
FIG. 10 is a diagram of a partial structure of an electro-mechanical braking apparatus according to an embodiment of this application;
FIG. 11 is a diagram of a partial structure of an electro-mechanical braking apparatus according to an embodiment of this application;
FIG. 12 is a diagram of a partial structure of an electro-mechanical braking apparatus according to an embodiment of this application; and
FIG. 13 is a diagram of a partial structure of an electro-mechanical braking apparatus according to an embodiment of this application.

### DESCRIPTION OF EMBODIMENTS

The following describes technical solutions in embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application. This application provides an electro-mechanical braking apparatus. The electro-mechanical braking apparatus includes a brake motor and a parking mechanism. The brake motor outputs a braking force through a motor shaft. The parking mechanism includes a rotating shaft, a connecting rod, a driving member, a ratchet, and a pawl. The rotating shaft is spaced apart from the motor shaft in a radial direction of the motor shaft, and a central axis of the rotating shaft is parallel to a central axis of the motor shaft. The connecting rod includes a first end and a second end that are opposite to each other, a middle segment of the connecting rod is configured to rotatably connect to the rotating shaft, and the first end and the second end are respectively arranged on two sides of the middle segment in a radial direction of the rotating shaft. The driving member is configured to be in transmission connection to the first end, the driving member is configured to drive, through the first end, the second end to rotate around the rotating shaft, and the second end is configured to position at a first parking position or a second parking position. The ratchet is configured to be sleeved on an outer circumferential surface of the motor shaft. The pawl is elastically connected to the second end, the pawl is in single-flank engagement with a ratchet tooth in a circumferential direction of the motor shaft when the second end is positioned at the first parking position, and the pawl releases the ratchet tooth when the second end is positioned at the second parking position. During re-clamping of the electro-mechanical braking apparatus, the connecting rod and the driving member may remain relatively stationary, so that a service life of the electro-mechanical braking apparatus is prolonged while parking reliability is ensured.

This application provides a vehicle. The vehicle includes a wheel and the electro-mechanical braking apparatus provided in any one of the foregoing implementations, the electro-mechanical braking apparatus is fastened to a vehicle frame of the vehicle, and the electro-mechanical braking apparatus is configured to brake a brake disc of the wheel. The vehicle provided in this application uses the foregoing electro-mechanical braking apparatus, so that the parking reliability is improved, and the service life of the electro-mechanical braking apparatus is prolonged.

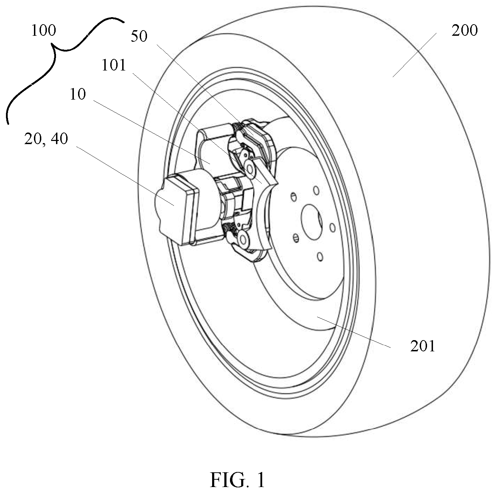

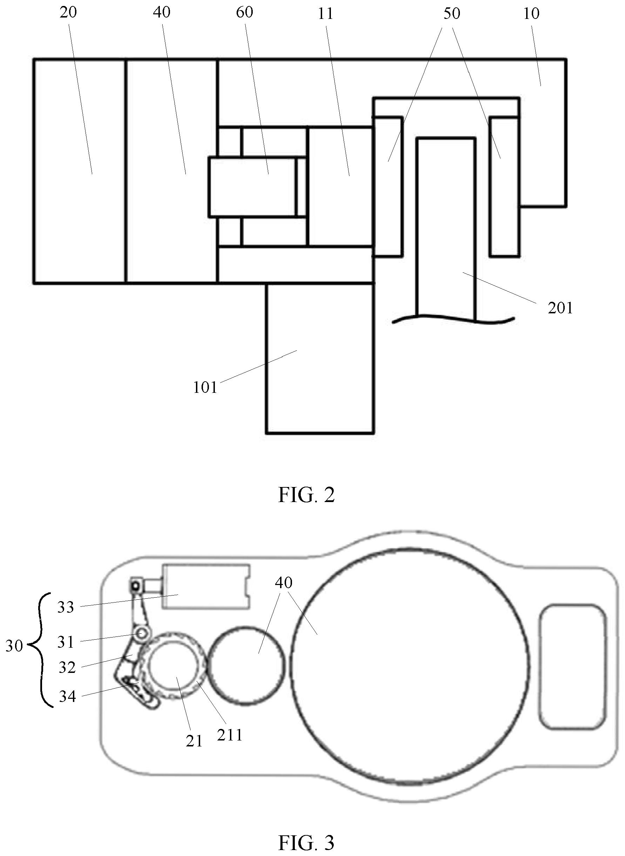

Refer to FIG. 1 and FIG. 2. FIG. 1 is a diagram of a structure of a vehicle at a wheel 200 according to an embodiment of this application. FIG. 2 is a diagram of a framework of an electro-mechanical braking apparatus 100 according to an embodiment of this application.

The vehicle provided in this application includes a wheel 200 and an electro-mechanical braking apparatus 100. The wheel 200 is rotatably connected to a vehicle frame. The wheel 200 includes a brake disc 201. The brake disc 201 is fastened to a wheel hub of the wheel 200. During traveling of the vehicle, the brake disc 201 is configured to rotate synchronously with the wheel hub of the wheel 200. The electro-mechanical braking apparatus 100 is the electro-mechanical braking apparatus synchronously provided in embodiments of this application. The electro-mechanical braking apparatus 100 is fastened to the vehicle frame. The electro-mechanical braking apparatus 100 is configured to be in contact with the brake disc 201 to form a friction force, to limit rotation of the wheel 200 to brake the vehicle. The electro-mechanical braking apparatus 100 provided in this application includes a brake motor 20, and the brake motor 20 is configured to output a braking force. In an embodiment, the brake motor 20 includes a motor shaft 21, a motor stator, and a motor rotor. The motor stator is coaxially sleeved on a periphery of the motor rotor. The motor stator of the brake motor 20 is fastened to a housing of the electro-mechanical braking apparatus 100, and the motor shaft 21 is fastened to the motor rotor. The motor stator is configured to receive a braking signal to generate an alternating magnetic field, thereby driving the motor rotor and the motor shaft 21 to rotate synchronously to output the braking force.

In an embodiment, the electro-mechanical braking apparatus 100 provided in this application includes a caliper 10 and two friction plates 50. The caliper 10 is configured to drive the two friction plates 50 to brake the brake disc 201. The two friction plates 50 are arranged on two sides of the brake disc 201 in an axial direction of the brake disc 201, and the brake motor 20 works with the caliper 10 to drive the two friction plates 50 to separately slide toward the brake disc 201 to brake the brake disc 201.

In an embodiment, the electro-mechanical braking apparatus 100 includes a reducer 40. The brake motor 20 is configured to output the braking force. The reducer 40 is configured to: receive the braking force and drive the friction plate 50 to brake. The motor shaft 21 is configured to be in transmission connection to an input shaft of the reducer 40. The brake motor 20 is configured to drive, through the reducer 40, the friction plate 50 to move toward the brake disc 201, so that the friction plate 50 is in contact with the brake disc 201 to form a friction force, thereby limiting rotation of the wheel 200 to brake the vehicle.

In an embodiment, the electro-mechanical braking apparatus 100 includes a lead screw nut 60. The reducer 40 is configured to be in transmission connection to the motor shaft 21 of the brake motor 20 and the lead screw nut 60. A lead screw or a nut in the lead screw nut 60 is configured to: receive a drive from the reducer 40 to rotate, and the nut or the lead screw in the lead screw nut 60 is configured to drive the friction plate 50 to slide toward the brake disc 201. In an embodiment, the caliper 10 is configured to slidably connect to a screw sleeve 11, and the screw sleeve 11 is configured to receive a drive to push the friction plate 50 to brake the brake disc 201. The lead screw nut 60 is configured to be in transmission connection to the reducer 40 and the screw sleeve 11, and the screw sleeve 11 is configured to abut against one friction plate 50 to push the friction plate 50 to brake the brake disc 201. In an embodiment, the screw sleeve 11 is in transmission connection between the lead screw nut 60 and one friction plate 50.

In an embodiment, the electro-mechanical braking apparatus 100 provided in this application further includes a housing, and the housing is configured to accommodate the brake motor 20 and the reducer 40. The caliper 10 is configured to accommodate the screw sleeve 11. In an embodiment, the caliper 10 is further configured to accommodate the lead screw nut 60. The reducer 40 is in transmission connection to the lead screw nut 60. In an embodiment, the housing is configured to accommodate and fasten the motor stator of the brake motor 20. In an embodiment, the caliper 10 is configured to accommodate and fasten the motor stator of the brake motor 20.

In an embodiment, the electro-mechanical braking apparatus 100 further includes a caliper carrier 101, and the caliper carrier 101 is fastened to the vehicle frame and is slidably connected to the caliper 10. The caliper carrier 101 is further configured to slidably connect to the two friction plates 50. During braking of the vehicle in this application, power output by the motor shaft 21 of the brake motor 20 is transmitted sequentially through the reducer 40, the lead screw nut 60, and the screw sleeve to the two friction plates 50, so that the friction plates 50 are driven from both sides to separately slide toward the brake disc 201 to brake the wheel 200.

During operation of the electro-mechanical braking apparatus 100 in this application, when the motor stator of the brake motor 20 receives a braking signal, the motor stator drives the motor rotor to drive the motor shaft 21 to rotate. The motor shaft 21 drives, through the reducer 40, the lead screw nut 60 to rotate synchronously. The lead screw nut 60 pushes, through the screw sleeve 11, one friction plate 50 to slide toward the brake disc 201. After one friction plate 50 abuts against the brake disc 201, the brake motor 20 continues to output a braking force through the motor shaft 21, and the caliper 10 slides relative to the caliper carrier 101 and drives the other friction plate 50 to slide toward the brake disc 201. Therefore, the two friction plates 50 clamp the brake disc 201 from the two sides of the brake disc 201, and the two friction plates 50 form a friction force with the brake disc 201, to brake the wheel 200.

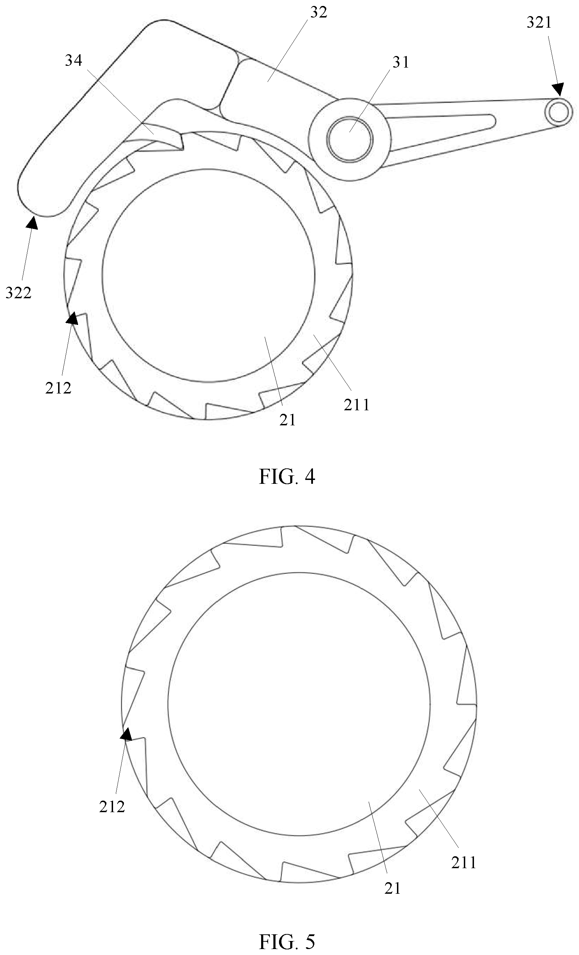

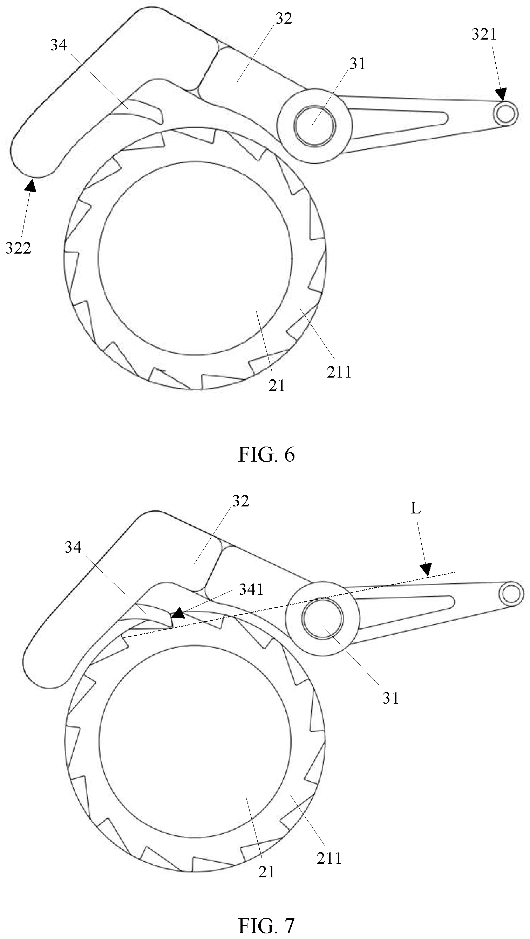

Refer to FIG. 3 to FIG. 6. FIG. 3 is a diagram of a partial structure of an electro-mechanical braking apparatus 100 according to an embodiment of this application. FIG. 4 is a diagram of a partial structure of an electro-mechanical braking apparatus 100 according to an embodiment of this application. FIG. 5 is a diagram of a structure of a ratchet 211 in an electro-mechanical braking apparatus 100 according to an embodiment of this application. FIG. 6 is a diagram of a structure of a parking mechanism 30 at a second parking position 02 in an electro-mechanical braking apparatus 100 according to an embodiment of this application.

The electro-mechanical braking apparatus 100 provided in this application includes a parking mechanism 30, the brake motor 20 outputs the braking force through the motor shaft 21, a ratchet 211 is sleeved on an outer circumferential surface of the motor shaft 21, and the parking mechanism 30 includes a rotating shaft 31, a connecting rod 32, a driving member 33, the ratchet 211, and a pawl 34. The rotating shaft 31 is spaced apart from the motor shaft 21 in a radial direction of the motor shaft 21, and a central axis of the rotating shaft 31 is parallel to a central axis of the motor shaft 21. The connecting rod 32 includes a first end 321 and a second end 322 that are opposite to each other, a middle segment of the connecting rod 32 is configured to rotatably connect to the rotating shaft 31, and the first end 321 and the second end 322 of the connecting rod 32 are respectively arranged on two sides of the middle segment of the connecting rod 32.

In an arrangement direction of the first end 321 and the second end 322, the driving member 33 is arranged on a side that is of the first end 321 and that faces away from the second end 322. The driving member 33 is fastened to a housing of the electro-mechanical braking apparatus 100, and may move relative to the housing of the electro-mechanical braking apparatus 100. The driving member 33 is configured to be in transmission connection to the first end 321, and the driving member 33 is configured to drive, through the first end 321, the connecting rod 32 to rotate around the rotating shaft 31. That is, the driving member 33 is configured to drive, through the first end 321, the second end 322 to rotate around the rotating shaft 31.

The pawl 34 is elastically connected to the second end 322. In a process of rotating around the rotating shaft 31, the second end 322 is configured to position at a first parking position 01 or a second parking position 02. The pawl 34 is in single-flank engagement with a ratchet tooth 212 of the ratchet 211 in a circumferential direction of the motor shaft 21 when the second end 322 is positioned at the first parking position 01, and the pawl 34 releases the ratchet tooth 212 of the ratchet 211 when the second end 322 is positioned at the second parking position 02.

As shown in FIG. 3 and FIG. 4, when the second end 322 is positioned at the first parking position 01, the pawl 34 is embedded in an outer circumferential surface of the ratchet 211, and is in single-flank engagement with the ratchet tooth 212 of the ratchet 211. In this embodiment of this application, single-flank engagement means that the ratchet tooth 212 of the ratchet 211 engages with the pawl 34 in one rotation direction in the circumferential direction of the motor shaft 21, and the pawl 34 abuts against the ratchet tooth 212 of the ratchet 211 to restrict the ratchet 211 from rotating relative to the motor shaft 21 in the rotation direction. In the other rotation direction of the motor shaft 21, the ratchet tooth 212 of the ratchet 211 may rotate by pushing the pawl 34. Because the ratchet 211 is sleeved on the outer circumferential surface of the motor shaft 21, the ratchet 211 is fastened to the motor shaft 21 in the circumferential direction of the motor shaft 21. Therefore, the single-phase engagement between the ratchet tooth 212 of the ratchet 211 and the pawl 34 may restrict rotation of the motor shaft 21 in one circumferential direction, and allow the motor shaft 21 to rotate in the other circumferential direction.

In this embodiment of this application, when the second end 322 is positioned at the first parking position 01, a direction in which the motor shaft 21 is restricted from rotating in a circumferential direction after the pawl 34 is in single-flank engagement with the ratchet tooth 212 of the ratchet 211 is defined as a forward rotating direction. A direction in which the motor shaft 21 drives the ratchet 211 to rotate and pushes the pawl 34 through the ratchet tooth 212 of the ratchet 211 is defined as a reverse rotating direction. Therefore, when the second end 322 is positioned at the first parking position 01, the pawl 34 is configured to: restrict the motor shaft 21 from rotating in a forward direction, and allow the motor shaft 21 to rotate in a reverse direction.

For example, when the second end 322 is positioned at the first parking position 01, the pawl 34 is in single-flank engagement with the ratchet tooth 212 of the ratchet 211 to restrict clockwise rotation of the motor shaft 21 while allowing counterclockwise rotation of the motor shaft 21. In this case, the forward rotation of the motor shaft 21 is defined as a clockwise direction, and the reverse rotation of the motor shaft 21 is defined as a counterclockwise direction. Alternatively, the pawl 34 is in single-flank engagement with the ratchet tooth 212 of the ratchet 211, to restrict counterclockwise rotation of the motor shaft 21 while allowing clockwise rotation of the motor shaft 21. In this case, the forward rotation of the motor shaft 21 is defined as a counterclockwise direction, and the reverse rotation of the motor shaft 21 is defined as a clockwise direction.

In an embodiment, the pawl 34 is slidably connected to the second end 322, and receives an elastic force that causes the pawl 34 to slide toward the ratchet 211. A size range in which the pawl 34 slides relative to the second end 322 is greater than a tooth height of the ratchet tooth 212 of the ratchet 211. Therefore, in a process in which the motor shaft 21 drives the ratchet 211 to rotate and re-clamp, the ratchet tooth 212 pushes the pawl 34 to overcome the elastic force and then slide back to the second end 322. A sliding retraction distance of the pawl 34 is equal to the tooth height of the ratchet tooth 212, so that the pawl 34 may clear the ratchet tooth 212 of the ratchet 211. During re-clamping of the ratchet 211, the driving member 33 and the connecting rod 32 remain relatively stationary, and no displacement is generated.

In this embodiment of this application, a forward rotation direction of the motor shaft 21 is defined as a direction in which the electro-mechanical braking apparatus 100 outputs the braking force. That is, the motor shaft 21 rotates forward to drive the two friction plates 50 to move toward the brake disc 201 and brake the wheel. When the motor shaft 21 rotates in reverse, the two friction plates 50 are driven to release the brake disc. Therefore, when the vehicle is parked, the electro-mechanical braking apparatus 100 needs to drive the two friction plates 50 to clamp the brake disc 201 to prevent the wheel from rotating. In this case, this clamping action is also implemented by forward rotation of the motor shaft 21. That is, the motor shaft 21 in the electro-mechanical braking apparatus 100 rotates forward to implement functions of braking and parking, and the motor shaft 21 rotates in reverse to disengage braking and release a parking state.

For ease of description, unless otherwise specified, in subsequent embodiments of this application, cooperation between the pawl 34 and the ratchet 211 is performed based on a state in which the second end 322 is positioned at the first parking position 01.

In an embodiment, the brake motor 20 outputs the braking force by driving the motor shaft 21 to rotate, where the pawl 34 is in single-flank engagement with the ratchet tooth 212 of the ratchet 211 to restrict the motor shaft 21 from rotating in an opposite direction of the output braking force. That is, when the second end 322 is positioned at the first parking position 01, the pawl 34 is in single-flank engagement with the ratchet tooth 212 of the ratchet 211 to restrict reverse rotation of the motor shaft 21 while allowing forward rotation of the motor shaft 21. In this embodiment, a rotation direction of the motor shaft 21 when the brake motor 20 outputs the braking force corresponds to an action of driving the friction plates 50 to clamp the brake disc 201, that is, a rotation direction of the brake motor 20 during parking and re-clamping of the electro-mechanical braking apparatus 100. A rotation direction in which the parking mechanism 30 is in single-flank engagement with the ratchet tooth 212 of the ratchet 211 is opposite to a rotation direction of the motor shaft 21 when the brake motor 20 outputs the braking force, so that the ratchet 211 may be used to restrict reverse rotation of the motor shaft 21, to avoid a parking failure caused by release of the brake disc 201 by the friction plates 50.

In an embodiment, the ratchet 211 includes a plurality of ratchet teeth 212. The plurality of ratchet teeth 212 are located on the outer circumferential surface of the ratchet 211, and the plurality of ratchet teeth 212 are spaced apart in the circumferential direction of the motor shaft 21. When the second end 322 is positioned at the first parking position 01, the pawl 34 is configured to embed in a gap between two adjacent ratchet teeth 212 and form single-flank engagement with the ratchet tooth 212, to restrict reverse rotation of the motor shaft 21 through the ratchet 211. In the circumferential direction of the motor shaft 21, one side of the ratchet tooth 212 is an inclined surface. When the motor shaft 21 rotates forward, the inclined surface of the ratchet tooth 212 is used to push the pawl 34 to retract and avoid the ratchet tooth 212, to implement a forward rotation action of the motor shaft 21.

When the second end 322 is positioned at the second parking position 02, the second end 322 of the connecting rod 32 rotates toward a direction away from the ratchet 211, and drives the pawl 34 to withdraw from the ratchet tooth 212 of the ratchet 211. The pawl 34 disengages from the ratchet tooth 212 of the ratchet 211. In this case, the parking mechanism 30 does not restrict forward rotation or reverse rotation of the ratchet 211. In this case, the brake motor 20 may normally drive, through the motor shaft 21, the friction plates 50 to clamp or release the brake disc 201.

The electro-mechanical braking apparatus 100 provided in this application implements, through cooperation between the parking mechanism 30 and the ratchet 211 sleeved on the outer circumferential surface of the motor shaft 21, a unidirectional locking function on the motor shaft 21 during parking. The driving member 33 and the pawl 34 are arranged on two sides of the rotating shaft 31. The driving member 33 drives, through the connecting rod 32, the pawl 34 to rotate toward the ratchet 211 and be in single-flank engagement with the ratchet tooth 212 of the ratchet 211, or the driving member 33 drives, through the connecting rod 32, the pawl 34 to rotate away from the ratchet 211 and release the ratchet tooth 212 of the ratchet 211.

In the electro-mechanical braking apparatus 100 provided in this application, the second end 322 of the connecting rod 32 is further elastically connected to the pawl 34, so that during re-clamping of the electro-mechanical braking apparatus 100, only the motor shaft 21 needs to be driven to drive the ratchet 211 to rotate reversely, and the ratchet tooth 212 of the ratchet 211 pushes the pawl 34 back toward the second end 322 to complete the operation. During re-clamping of the electro-mechanical braking apparatus 100, the connecting rod 32 and the driving member 33 may remain relatively stationary. That is, an amplitude of a follow-up motion of the parking mechanism 30 is small during re-clamping, and the driving member 33 may keep a trend of locking the ratchet 211.

According to the electro-mechanical braking apparatus 100 provided in this application, a service life of the electro-mechanical braking apparatus 100 is prolonged while parking reliability is ensured. The vehicle provided in this application uses the foregoing electro-mechanical braking apparatus 100, so that the parking reliability is improved, and the service life of the electro-mechanical braking apparatus 100 is prolonged.

In an embodiment, the motor shaft 21 is further arranged adjacent to and engages with a gear of the reducer 40 for transmission to output the braking force. In an arrangement direction of the motor shaft 21 and the gear of the reducer 40, the connecting rod 32 is located on a side that is of the motor shaft 21 and that faces away from the gear of the reducer 40. In a direction perpendicular to the arrangement direction of the motor shaft 21 and the gear of the reducer 40, the driving member 33 is arranged on a side of the motor shaft 21. In this way, the parking mechanism 30 may be arranged by using radial space of the motor shaft 21, and is close to the motor shaft 21. An extension length of the connecting rod 32 can be reduced, and an overall size of the parking mechanism 30 can be reduced. Because a radius of the gear of the reducer 40 is greater than a diameter of the motor shaft, the parking mechanism 30 does not increase the overall size of the electro-mechanical braking apparatus 100.

In an embodiment, the caliper 10 and the housing are adjacently fastened in an axial direction of the motor shaft 21. The parking mechanism 30 is embedded in the caliper 10 or the housing. In an embodiment, a part of the parking mechanism 30 is embedded in the caliper 10, and the other part of the parking mechanism 30 is embedded in the housing. In this way, a size of the electro-mechanical braking apparatus 100 in the axial direction of the motor shaft 21 can be compressed, and an effect of accommodating and protecting the parking mechanism 30 is formed by using the caliper 10 and the housing.

In an embodiment, a rotation direction in which the second end 322 rotates from the first parking position 01 to the second parking position 02 is the same as a rotation direction in which the motor shaft 21 outputs the braking force. That is, when the second end 322 is positioned at the first parking position 01, the pawl 34 is in single-flank engagement with the ratchet tooth 212 of the ratchet 211 to restrict reverse rotation of the motor shaft 21. The rotation direction in which the second end 322 rotates from the first parking position 01 to the second parking position 02 is the same as a rotation direction in which the motor shaft 21 rotates forward. In this embodiment, a rotation direction of the connecting rod 32 relative to the ratchet 211 in a process of locking or releasing the ratchet tooth 212 of the ratchet 211 is constrained, so that the connecting rod 32 is facilitated to drive the pawl 34 to engage with or disengage from the ratchet tooth 212 of the ratchet 211, thereby avoiding interference between the pawl 34 and the ratchet tooth 212 of the ratchet 211 and causing jamming of the parking mechanism 30.

In other words, when the second end 322 rotates from the second parking position 02 to the first parking position 01, a rotation direction of the second end 322 is the same as a reverse rotation direction of the motor shaft 21. Because the motor shaft 21 rotates forward to drive the friction plates 50 to clamp the brake disc 201, when the second end 322 rotates from the second parking position 02 to the first parking position 01, in a tangential direction in which the pawl 34 engages with the ratchet tooth 212, a motion direction of the pawl 34 is the same as a motion direction of each ratchet tooth 212 when the ratchet 211 rotates forward with the motor shaft 21. This facilitates the pawl 34 to engage between two adjacent ratchet teeth 212 and abut against one ratchet tooth 212 to restrict reverse rotation of the ratchet 211. When the second end 322 rotates from the first parking position 01 to the second parking position 02, in a tangential direction in which the pawl 34 engages with the ratchet tooth 212, a motion direction of the pawl 34 is opposite to a motion direction of each ratchet tooth 212 when the ratchet 211 rotates with the motor shaft 21. This facilitates the pawl 34 to withdraw from a gap between two adjacent ratchet teeth 212 to release the ratchet tooth 212 of the ratchet 211.

In an embodiment, the pawl 34 includes an engagement surface 341, and the engagement surface 341 is configured to engage with the ratchet tooth 212 of the ratchet 211 when the second end 322 is positioned at the first parking position 01, to restrict reverse rotation of the ratchet 211 and the motor shaft 21.

In an embodiment, the central axis of the motor shaft 21 and the central axis of the rotating shaft 31 are arranged on a same side of a central perpendicular line of the engagement surface 341.

FIG. 7 is a diagram of a partial structure of an electro-mechanical braking apparatus 100 according to an embodiment of this application.

In this embodiment, because the engagement surface 341 of the pawl 34 is configured to engage with the ratchet tooth 212 of the ratchet 211, the central perpendicular line L of the engagement surface 341 of the pawl 34 is a pressure direction present when the pawl 34 is in single-flank engagement with the ratchet 211, that is, a direction of a pressure exerted by the ratchet tooth 212 of the ratchet 211 on the pawl 34. If the central axis of the motor shaft 21 and the central axis of the rotating shaft 31 are arranged on two sides of the central perpendicular line L of the engagement surface 341, a direction of a torque formed by the pressure exerted by the ratchet 211 on the pawl 34 is the same as a direction in which the second end 322 rotates around the rotating shaft 31 to the second parking position 02. That is, the pressure exerted by the ratchet tooth 212 of the ratchet 211 on the pawl 34 forms a motion trend of rotating toward the second parking position 02 and exiting the first parking position 01 on the pawl 34. When the pressure exerted by the ratchet tooth 212 of the ratchet 211 on the pawl 34 is large, the second end 322 of the connecting rod 32 may rotate around the rotating shaft 31 and return to the second parking position 02, which leads to a failure of a parking function of the parking mechanism 30.

Therefore, the central axis of the motor shaft 21 and the central axis of the rotating shaft 31 are constrained to be arranged on a same side of the central perpendicular line L of the engagement surface 341, so that the torque formed by the pressure exerted by the ratchet tooth 212 of the ratchet 211 on the pawl 34 may form a trend, on the connecting rod 32, that the second end 322 of the connecting rod 32 moves toward the first parking position 01. Regardless of a magnitude of the pressure exerted by the ratchet tooth 212 of the ratchet 211 on the pawl 34, the second end 322 is not driven to rotate toward the second parking position 02. Therefore, this may prevent a phenomenon that the torque received by the pawl 34 drives the connecting rod 32 to move toward the second parking position 02 and consequently disengage the single-phase engagement between the pawl 34 and the ratchet 211.

In an embodiment, the engagement surface 341 faces the rotating shaft 31 in an arrangement direction of the motor shaft 21 and the rotating shaft 31. In this embodiment, the pawl 34 includes the other side surface opposite to the engagement surface 341, and the other surface is an inclined surface. An orientation of the engagement surface 341 that is of the pawl 34 and that engages with the ratchet tooth 212 of the ratchet 211 is constrained, so that an orientation of the other side surface of the pawl 34 is the reverse rotation direction of the motor shaft 21. During re-clamping of the electro-mechanical braking apparatus 100, the ratchet tooth 212 of the ratchet 211 abuts against the other side surface that is of the pawl 34 and that faces away from the rotating shaft 31, so that the ratchet tooth 212 can push the pawl 34, thereby ensuring that the ratchet 211 reliably rotates forward with the motor shaft 21 and implementing a re-clamping function.

In an embodiment, the parking mechanism 30 includes a spring, the pawl 34 is rotatably or slidably connected to the second end 322, and the spring is positioned between the connecting rod 32 and the pawl 34 in an abutting manner and is configured to drive the pawl 34 to rotate or slide toward the ratchet 211. In this embodiment, the spring abuts against the pawl 34 to allow the pawl to rotate or slide relative to the second end 322, so that the pawl 34 is pushed by the ratchet tooth 212 of the ratchet 211 during re-clamping of the electro-mechanical braking apparatus 100, thereby compressing the spring, and allowing the pawl 34 to retract toward the second end 322. The ratchet 211 may continue to rotate forward to implement the re-clamping function.

In this process, the driving member 33 and the connecting rod 32 both remain in a relatively stationary state, and the parking mechanism 30 achieves the re-clamping function of the electro-mechanical braking apparatus 100 with only a small internal motion. An overall motion amplitude of the parking mechanism 30 is small, and the service life can be prolonged.

In an embodiment, the pawl 34 is rotatably connected to the second end 322 and is located between the second end 322 and the rotating shaft 31, the spring is a leaf spring 351, and the leaf spring 351 is configured to push the pawl 34 to rotate toward the ratchet 211. In this embodiment, one end of the pawl 34 is rotatably connected to the second end 322, and the pawl 34 extends toward the first end 321 in an arrangement direction of the second end 322 and the first end 321. In other words, a length of the pawl 34 overlaps with that of the connecting rod 32 in the arrangement direction of the second end 322 and the first end 321, so that an overall size of the parking mechanism 30 can be reduced. The spring configured as the leaf spring 351 may abut against the middle segment of the connecting rod 32 and push the pawl 34 to rotate toward the ratchet 211.

In an embodiment, the connecting rod 32 includes an accommodation groove 323, and the accommodation groove 323 is located between the second end 322 and the rotating shaft 31 in the arrangement direction of the second end 322 and the first end 321. A length size of the accommodation groove 323 is greater than a length size of the pawl 34 and less than a sum of the length size of the pawl 34 and a length size of the leaf spring 351. A groove opening of the accommodation groove 323 faces the ratchet 211 in a direction perpendicular to the arrangement direction of the second end 322 and the first end 321. The accommodation groove 323 is configured to accommodate the pawl 34 and the leaf spring 351, and the leaf spring 351 at least partially overlaps with the pawl 34 in the arrangement direction of the second end 322 and the first end 321. Therefore, the connecting rod 32 may be provided with the accommodation groove 323 to accommodate the leaf spring 351, and a structure of a part of the pawl 34 may be accommodated when the pawl 34 is pushed by the ratchet tooth 212 of the ratchet 211 to retract. The overall size of the parking mechanism 30 is small, which facilitates miniaturization of the electro-mechanical braking apparatus 100.

In an embodiment, the accommodation groove 323 includes a first groove wall 3231 and a second groove wall 3232 that are opposite to each other in the arrangement direction of the second end 322 and the first end 321. The first groove wall 3231 is arranged between the first end 321 and the second groove wall 3232, the leaf spring 351 is fastened to the first groove wall 3231, and the pawl 34 is rotatably connected to the second groove wall 3232.

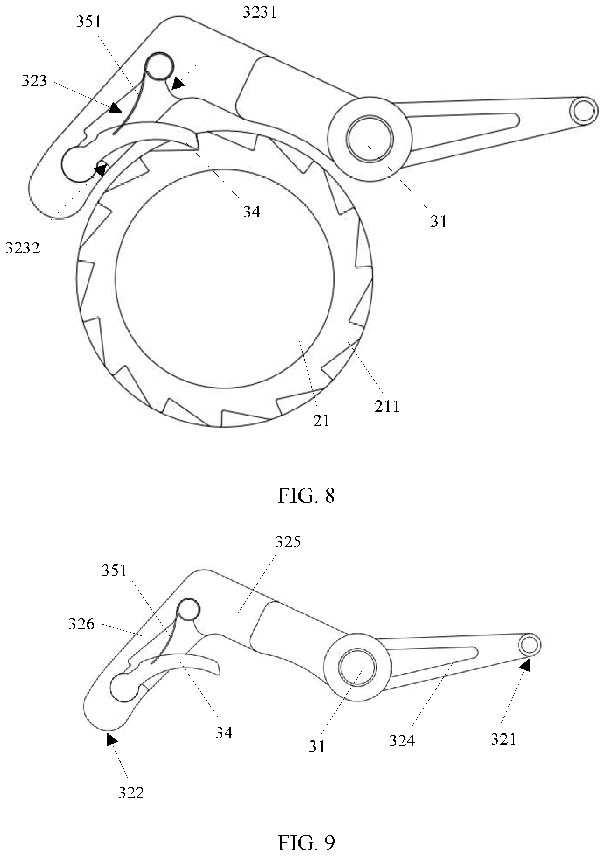

FIG. 8 is a diagram of a partial structure of an electro-mechanical braking apparatus 100 according to an embodiment of this application.

In this embodiment, the pawl 34 and the leaf spring 351 are respectively mounted on two opposite groove walls of the accommodation groove 323, and the pawl 34 and the leaf spring 351 extend toward each other in a length direction of the connecting rod 32 in the arrangement direction of the second end 322 and the first end 321, so that internal space of the accommodation groove 323 can be properly used, and an effect of gradually increasing a thrust force of the leaf spring 351 is formed during retracting of the pawl 34, thereby ensuring reliable reset of the pawl 34.

In an embodiment, the connecting rod 32 includes a first segment 324 and a second segment 325 that are connected. The first segment 324 is located between the rotating shaft 31 and the first end 321, the second segment 325 is located between the rotating shaft 31 and the second end 322, the first segment 324 intersects with the second segment 325, and an opening of an included angle between the first segment 324 and the second segment 325 faces away from the motor shaft 21.

FIG. 9 is a diagram of a partial structure of an electro-mechanical braking apparatus 100 according to an embodiment of this application.

In this embodiment, in the arrangement direction of the second end 322 and the first end 321, an extension path of the connecting rods 32 on the two sides of the rotating shaft 31 is bent toward the motor shaft 21, so that a spacing between the driving member 33 and the motor shaft 21 can be shortened, the overall size of the parking mechanism 30 can be reduced, and miniaturization of the electro-mechanical braking apparatus 100 is facilitated.

In an embodiment, the connecting rod 32 includes a third segment 326. The second end 322 is connected to the second segment 325 through the third segment 326, the third segment 326 intersects with the second segment 325, and an opening of an included angle between the third segment 326 and the second segment 325 faces the motor shaft 21. That is, the second end 322 is located on a side that is of the third segment 326 and that faces away from the second segment 325.

In this embodiment, the connecting rod 32 is further bent between the rotating shaft 31 and the second end 322, so that the included angle with the opening facing the motor shaft 21 is formed between the second segment 325 and the third segment 326. A spacing between the second segment 325 and the motor shaft 21 and a spacing between the third segment 326 and the motor shaft 21 are controlled, thereby shortening a radial spacing between the pawl 34 and the ratchet 211 along the motor shaft 21. In a circumferential direction of the rotating shaft 31, a spacing between the first parking position 01 and the second parking position 02 of the second end 322 is smaller, thereby reducing a rotation angle of the connecting rod 32 around the rotating shaft 31. In this way, the overall size of the parking mechanism 30 is further reduced, which facilitates miniaturization of the electro-mechanical braking apparatus 100.

In an embodiment, in the direction perpendicular to the arrangement direction of the second end 322 and the first end 321, a radius of the outer circumferential surface of the ratchet 211 is greater than a distance between the second end 322 and the central axis of the motor shaft 21, and the radius of the outer circumferential surface of the ratchet 211 is further greater than a distance between the central axis of the rotating shaft 31 and the central axis of the motor shaft 21. That is, in the direction perpendicular to the arrangement direction of the second end 322 and the first end 321, the connecting rod 32 is bent around the outer circumferential surface of the ratchet 211 on the extension path, so that the rotating shaft 31 and the second end 322 are respectively close to the ratchet 211, thereby reducing the overall size of the parking mechanism 30, and facilitating miniaturization of the electro-mechanical braking apparatus 100.

In an embodiment, the pawl 34 is rotatably connected to the second end 322 and is located on a side that is of the second end 322 and that faces away from the rotating shaft 31, the spring is a coil spring 352, and the coil spring 352 is configured to drive the pawl 34 to rotate toward the ratchet 211.

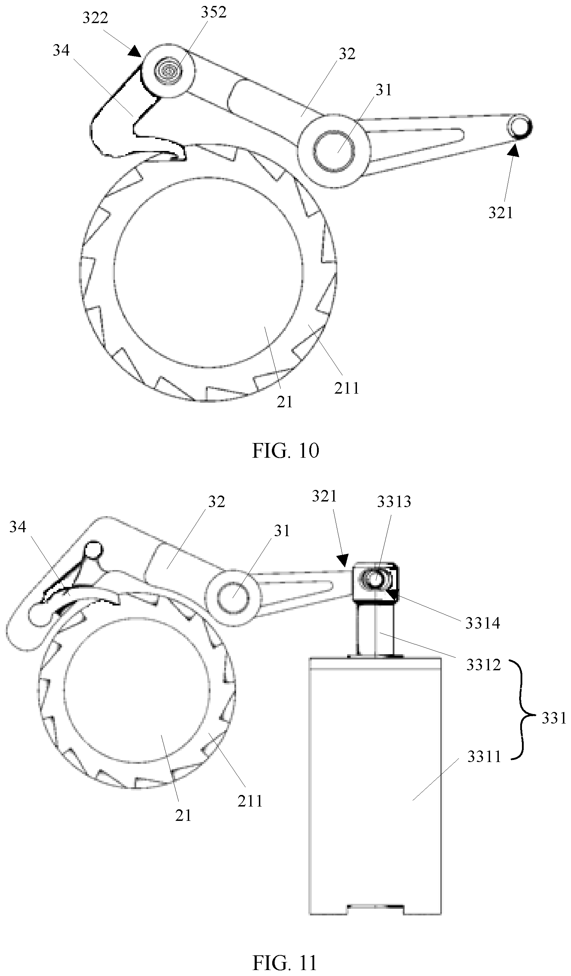

FIG. 10 is a diagram of a partial structure of an electro-mechanical braking apparatus 100 according to an embodiment of this application.

In this embodiment, in the length direction of the connecting rod 32, the pawl 34 extends from the second end 322 toward a direction away from the first end 321 and is rotatably connected to the second end 322. The spring configured as the coil spring 352 may be located at a rotational joint of the pawl 34 and the second end 322, to drive the pawl 34 to rotate toward the ratchet 211.

In addition, in this embodiment, an extension path of the connecting rod 32 between the second end 322 and the rotating shaft 31 is a straight line, an included angle is formed between the pawl 34 and the connecting rod 32, and an opening of the included angle faces toward the motor shaft 21. In other words, in this embodiment, the pawl 34 is bent relative to the connecting rod 32, to form a structure similar to the third segment 326 in the embodiment of the leaf spring 351. A spacing between the pawl 34 and the motor shaft 21 and a spacing between the connecting rod 32 and the motor shaft 21 are also controlled, thereby also shortening a radial spacing between the pawl 34 and the ratchet 211 along the motor shaft 21. In a circumferential direction of the rotating shaft 31, a spacing between the first parking position 01 and the second parking position 02 of the second end 322 is smaller, thereby also reducing a rotation angle of the connecting rod 32 around the rotating shaft 31. In this way, the overall size of the parking mechanism 30 is further reduced, which facilitates miniaturization of the electro-mechanical braking apparatus 100.

In an embodiment, the driving member 33 includes a parking motor 331, and the parking motor 331 is configured to drive the first end 321 of the connecting rod 32 to rotate around the rotating shaft 31. In an embodiment, the parking motor 331 is a linear motor, a stator 3311 of the parking motor 331 is fastened to the housing of the electro-mechanical braking apparatus 100, and a mover 3312 of the parking motor 331 is configured to: slide relative to the stator 3311 and drive the first end 321 to rotate around the rotating shaft 31.

FIG. 11 is a diagram of a partial structure of an electro-mechanical braking apparatus 100 according to an embodiment of this application.

In this embodiment, the driving member 33 is a parking motor 331, and the parking motor 331 in this embodiment is a linear motor. A mover 3312 of the parking motor 331 slides relative to a stator 3311 of the parking motor 331 and drives the first end 321 to rotate around the rotating shaft 31, to drive the pawl 34 through the second end 322.

In an embodiment, one of the mover 3312 of the parking motor 331 and the first end 321 includes a sliding pin 3313, the other of the mover 3312 of the parking motor 331 and the first end 321 includes a sliding groove 3314, the sliding pin 3313 is configured to: extend into the sliding groove 3314 and slide in the sliding groove 3314, and a length direction of the sliding groove 3314 intersects with a sliding direction of the mover 3312. In the embodiment of FIG. 11, the first end 321 includes the sliding pin 3313, and the mover 3312 includes the sliding groove 3314.

In this embodiment, because the mover 3312 of the parking motor 331 and the connecting rod 32 are both rigid bodies, during a process in which the mover 3312 of the parking motor 331 drives the first end 321 of the connecting rod 32 to slide, a motion trajectory of the first end 321 is a straight line. The sliding groove 3314 cooperates with the sliding pin 3313, so that a degree of freedom between the mover 3312 of the parking motor 331 and the connecting rod 32 in the radial direction of the motor shaft 21 of the brake motor 20 can be released. This achieves an effect in which the first end 321 rotates around the motor shaft 21 while sliding with the mover 3312 of the parking motor 331.

In an embodiment, the parking motor 331 is a rotary motor. A stator of the parking motor 331 is fastened to the housing of the electro-mechanical braking apparatus 100, and a rotor of the parking motor 331 is configured to: be in transmission connection to the connecting rod 32 through a lead screw nut 334, and drive, through the connecting rod 32, the first end 321 to rotate around the rotating shaft 31.

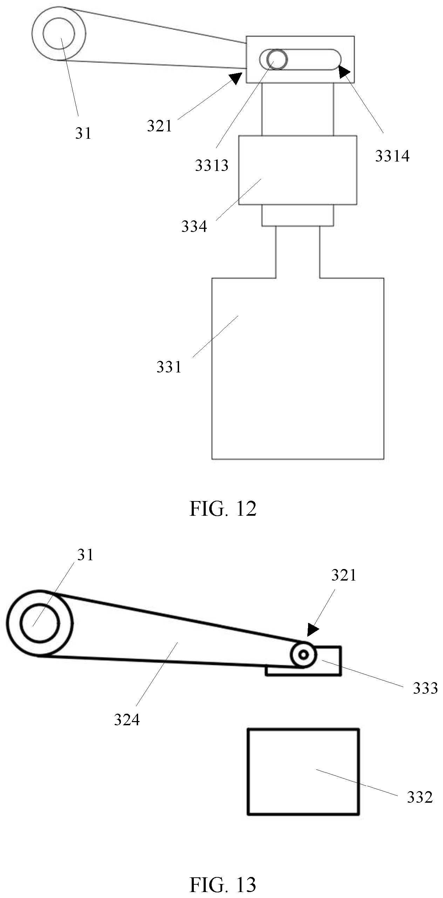

FIG. 12 is a diagram of a partial structure of an electro-mechanical braking apparatus 100 according to an embodiment of this application.

In this embodiment, the parking motor 331 is in a form of a rotary motor, and drives, through the lead screw nut 334, the first end 321 to rotate around the rotating shaft 31. A principle of the lead screw nut 334 of the parking mechanism 30 is similar to that of the lead screw nut 60 configured to drive the friction plates 50 in the electro-mechanical braking apparatus 100. In the parking mechanism 30, a lead screw or a nut in the lead screw nut 334 is configured to rotate synchronously with the rotor of the parking motor 331, and the nut or the lead screw in the lead screw nut 334 is configured to: slide in a direction of the central axis of the parking motor 331, and drive the first end 321 to rotate around the rotating shaft 31. The rotary parking motor 331 has low costs, and is easy to control.

In an embodiment, similar to a related solution in the foregoing embodiment in which the parking motor 331 is a linear motor, when the parking motor 331 is a rotary motor, coordinated motion between the lead screw nut 334 and the first end 321 is also achieved by the sliding pin 3313 and the sliding groove 3314.

In an embodiment, the driving member 33 includes an electromagnet 332 and a sliding block 333. The electromagnet 332 is fastened to the housing of the electro-mechanical braking apparatus 100, the sliding block 333 is slidably connected to the housing of the electro-mechanical braking apparatus 100, and the electromagnet 332 is configured to drive the sliding block 333 to slide and drive the first end 321 to rotate around the rotating shaft 31.

FIG. 13 is a diagram of a partial structure of an electro-mechanical braking apparatus 100 according to an embodiment of this application.

In this embodiment, the driving member 33 is the electromagnet 332 and the sliding block 333. The electromagnet 332 drives the sliding block 333 to drive the first end 321 to move toward or away from the electromagnet 332 by switching between an energized state and a de-energized state, to implement an operation of driving the pawl 34 by the connecting rod 32. A motion trajectory of the sliding block 333 may be in a curve shape, to adapt to rotation of the first end 321 around the motor shaft 21.

It is clear that a person skilled in the art can make various modifications and variations to this application without departing from the protection scope of this application. This application is intended to cover these modifications and variations of this application provided that they fall within the scope of the claims of this application and equivalent technologies thereof.

## Claims

1. An electro-mechanical braking apparatus, wherein the electro-mechanical braking apparatus comprises a brake motor and a parking mechanism, the brake motor outputs a braking force through a motor shaft, and the parking mechanism comprises:
a rotating shaft, wherein the rotating shaft is spaced apart from the motor shaft in a radial direction of the motor shaft, and a central axis of the rotating shaft is parallel to a central axis of the motor shaft;
a connecting rod, wherein the connecting rod comprises a first end and a second end that are opposite to each other, a middle segment of the connecting rod is configured to rotatably connect to the rotating shaft, and the first end and the second end are respectively arranged on two sides of the middle segment in a radial direction of the rotating shaft;
a driving member, wherein the driving member is configured to be in transmission connection to the first end, the driving member is configured to drive, through the first end, the second end to rotate around the rotating shaft, and the second end is configured to position at a first parking position or a second parking position;
a ratchet, wherein the ratchet is configured to be sleeved on an outer circumferential surface of the motor shaft;
and
a pawl, wherein the pawl is elastically connected to the second end, the pawl is in single-flank engagement with a ratchet tooth in a circumferential direction of the motor shaft when the second end is positioned at the first parking position, and the pawl releases the ratchet tooth when the second end is positioned at the second parking position.

2. The electro-mechanical braking apparatus according to claim 1, wherein the pawl comprises an engagement surface, and the engagement surface is configured to engage with the ratchet tooth when the second end is positioned at the first parking position, wherein
the central axis of the motor shaft and the central axis of the rotating shaft are arranged on a same side of a central perpendicular line of the engagement surface.

3. The electro-mechanical braking apparatus according to claim 1 or 2, wherein the brake motor outputs the braking force by driving the motor shaft to rotate, wherein
the pawl is in single-flank engagement with the ratchet tooth to restrict the motor shaft from rotating in an opposite direction of the output braking force;
a rotation direction in which the second end rotates from the first parking position to the second parking position is the same as a rotation direction in which the motor shaft outputs the braking force; and
a size range in which the pawl slides relative to the second end is greater than a tooth height of the ratchet tooth.

4. The electro-mechanical braking apparatus according to any one of claims 1 to 3, wherein the parking mechanism comprises a spring, the pawl is rotatably or slidably connected to the second end, and the spring is positioned between the connecting rod and the pawl in an abutting manner and is configured to drive the pawl to rotate or slide toward the ratchet.

5. The electro-mechanical braking apparatus according to claim 4, wherein the pawl is rotatably connected to the second end and is located between the second end and the rotating shaft, the spring is a leaf spring, and the leaf spring is configured to push the pawl to rotate toward the ratchet.

6. The electro-mechanical braking apparatus according to claim 5, wherein the connecting rod comprises an accommodation groove, the accommodation groove is located between the second end and the rotating shaft in an arrangement direction of the second end and the first end, a groove opening of the accommodation groove faces the ratchet in a direction perpendicular to the arrangement direction of the second end and the first end, and the accommodation groove is configured to accommodate the pawl and the leaf spring.

7. The electro-mechanical braking apparatus according to claim 6, wherein the accommodation groove comprises a first groove wall and a second groove wall that are opposite to each other in the arrangement direction of the second end and the first end, the first groove wall is arranged between the first end and the second groove wall, the leaf spring is fastened to the first groove wall, and the pawl is rotatably connected to the second groove wall.

8. The electro-mechanical braking apparatus according to claim 4, wherein the pawl is rotatably connected to the second end and is located on a side that is of the second end and that faces away from the rotating shaft, the spring is a coil spring, and the coil spring is configured to drive the pawl to rotate toward the ratchet.

9. The electro-mechanical braking apparatus according to any one of claims 1 to 8, wherein the connecting rod comprises a first segment and a second segment that are connected, the first segment is located between the rotating shaft and the first end, the second segment is located between the rotating shaft and the second end, the first segment intersects with the second segment, and an opening of an included angle between the first segment and the second segment faces away from the motor shaft.

10. The electro-mechanical braking apparatus according to claim 9, wherein the connecting rod comprises a third segment, the second end is connected to the second segment through the third segment, the third segment intersects with the second segment, and an opening of an included angle between the third segment and the second segment faces the motor shaft.

11. The electro-mechanical braking apparatus according to claim 10, wherein in the direction perpendicular to the arrangement direction of the second end and the first end, a radius of an outer circumferential surface of the ratchet is greater than a distance between the second end and the central axis of the motor shaft, and is greater than a distance between the central axis of the rotating shaft and the central axis of the motor shaft.

12. The electro-mechanical braking apparatus according to any one of claims 1 to 11, wherein the driving member comprises a parking motor, the parking motor is a linear motor, a stator of the parking motor is fastened to a housing of the electro-mechanical braking apparatus, and a mover of the parking motor is configured to: slide relative to the stator and drive, through the connecting rod, the first end to rotate around the rotating shaft.

13. The electro-mechanical braking apparatus according to claim 12, wherein one of the mover of the parking motor and the first end comprises a sliding pin, the other of the mover of the parking motor and the first end comprises a sliding groove, the sliding pin is configured to: extend into the sliding groove and slide in the sliding groove, and a length direction of the sliding groove intersects with a sliding direction of the mover.

14. The electro-mechanical braking apparatus according to any one of claims 1 to 11, wherein the driving member comprises a parking motor, the parking motor is a rotary motor, a stator of the parking motor is fastened to a housing of the electro-mechanical braking apparatus, and a rotor of the parking motor is configured to: be in transmission connection to the connecting rod through a lead screw nut, and drive, through the connecting rod, the first end to rotate around the rotating shaft.

15. A vehicle, wherein the vehicle comprises a wheel and the electro-mechanical braking apparatus according to any one of claims 1 to 14, the electro-mechanical braking apparatus is fastened to a vehicle frame of the vehicle, and the electro-mechanical braking apparatus is configured to brake a brake disc of the wheel.
